Europäisches Patentamt

European Patent Office

Office européen des brevets

(11) Numéro de publication: **0 293 996 B1**

## (12) FASCICULE DE BREVET EUROPEEN

(45) Date de publication de fascicule du brevet: **27.04.94**

(51) Int. Cl.5: **G01S 7/52**, G01S 15/02, G01H 9/00, G10K 11/18

(21) Numéro de dépôt: **88201096.0**

(22) Date de dépôt: **01.06.88**

(54) **Echographe ultrasonore utilisant au moins un transducteur piezoélectrique auquel est associé un écran de phase aléatoire et procédé d'exploration d'un milieu à l'aide d'un tel echographe.**

(30) Priorité: **04.06.87 FR 8707795**

(43) Date de publication de la demande:
**07.12.88 Bulletin 88/49**

(45) Mention de la délivrance du brevet:
**27.04.94 Bulletin 94/17**

(84) Etats contractants désignés:
**BE DE FR GB IT SE**

(56) Documents cités:
**EP-A- 0 092 191**
**EP-A- 0 181 668**
**EP-A- 0 211 219**
**EP-A- 0 219 187**
**US-A- 4 153 894**

**ACOUSTICAL HOLOGRAPHY, vol. 7, 1977, pages 291-305, Plenum Press, New York, US; J.F. HAVLICE et al.: "Spatially and temporally varying insonification for the elimination of spurious detail in acoustic transmission imaging"**

(73) Titulaire: **LABORATOIRES D'ELECTRONIOUE PHILIPS**
**3, Avenue Descartes**
**F-94450 Limeil-Brévannes(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:
**BE DE GB SE**

(73) Titulaire: **ETAT-FRANCAIS représenté par le DELEGUE GENERAL POUR L'ARMEMENT (DPAG)**
**Bureau des Brevets et Inventions de la Délégation Générale pour l'Armement**
**26, Boulevard Victor**
**F-75996 Paris Armées(FR)**

(84) Etats contractants désignés:
**BE DE FR GB IT SE**

ACOUSTICAL HOLOGRAPHY, vol. 5, 1974, pages 373-390, Plenum Press, New York, US; A. KORPEL et al.: "Elimination of spurious detail in acoustic images"

ULTRASONICS, vol. 18, no. 6, novembre 1980, pages 273-276, IPC Business Press, Guildford, GB; U. RÖDER et al.: "Scattered ultrasound for incoherent insonification in transmission imaging"

ULTRASONICS, vol. 24, no. 2, mars 1986, pages 66-72, Butterworth & Co. Publishers Ltd, Guildford, GB; L. FERRARI et al.: "In vivo measurement of attenuation"

ELECTRONIC LETTERS, vol. 17, no. 3, 5 février 1981, pages 116,117, Hitchin, GB; J. ATTAL et al.: "Acoustic microscopy with noncoherent source"

(72) Inventeur: **Fink, Mathias Société Civile S.P.I.D.**
**209, rue de l'Université**
**F-75007 Paris(FR)**

(74) Mandataire: **Charpail, François et al**
**Société Civile S.P.I.D.**
**156, Boulevard Haussmann**
**F-75008 Paris (FR)**

## Description

La présente invention concerne un échographe ultrasonore pour la caractérisation de tissus d'organes ou de matériaux comportant au moins un transducteur piézoélectrique assurant l'émission et/ou la réception d'un faisceau ultrasonore d'exploration, dans lequel audit transducteur piézoélectrique est associé un premier écran de phase aléatoire réalisé sous la forme d'une plaquette de matériau dont la vitesse de propagation du son est différente de celle de l'eau et situé dans le faisceau ultrasonore d'exploration.

L'invention concerne également un procédé d'exploration d'un milieu par échographie ultrasonore à l'aide d'un tel échographe.

L'invention trouve une application particulièrement avantageuse dans le domaine médical, et plus spécialement dans celui de la formation d'images d'organes et de la caractérisation des tissus desdits organes, ainsi que dans celui du contrôle non destructif des matériaux diffuseurs. En ce qui concerne les matériaux solides, il s'agit de façon générale de tous les matériaux à grains ou formés de fibres, et plus particulièrement des matériaux composites, des matériaux à gros grains, du titane. En ce qui concerne des matériaux mous, il s'agit des produits agroalimentaires tels que les produits laitiers, notamment les fromages, et les viandes.

Dans le domaine médical, le problème technique général que doit résoudre tout échographe ultrasonore conforme au préambule consiste le plus souvent, d'une part, à obtenir une image aussi exacte que possible du milieu soumis à exploration, quant à ses contours et aux parois spéculaires, telles que veines, qu'il contient, et, d'autre part, à permettre une étude pathologique sûre des tissus du même organe par une mesure précise de leur paramètre d'atténuation des ondes ultrasonores.

De même, dans le domaine du contrôle non destructif des matériaux, le problème technique consiste, d'une part, à détecter des défauts, tels que fissures de laminage, dans le bruit échographique des matériaux diffuseurs en différenciant un délaminage d'une zone de grosse porosité, et, d'autre part, à permettre toute mesure quantitative intéressant le contrôle non destructif, par une mesure précise du paramètre d'atténuation des ondes ultrasonores.

Diverses solutions à ce problème technique général ont déjà été proposées par le passé. Citons, en particulier, l'article de M. Fink "Imagerie ultrasonore" paru dans le Journal de Physique Appliquée 18 (1983) p.527-556, qui analyse de façon exhaustive tous les aspects de la formation échographique d'images, et le brevet français n° 2 514 910 concernant la mesure du paramètre d'atténuation.

Toutes ces solutions connues de l'état de la technique, si elles conduisent à des résultats souvent satisfaisants, présentent pourtant certains inconvénients et certaines limites.

D'abord, la détermination des contours d'organes, ou la détection des défauts dans les matériaux, et, plus généralement, des parois spéculaires fixes est perturbée par les interférences constructives et destructives des échos produits par les multidiffuseurs contenus dans le milieu étudié, ceci en relation avec le caractère cohérent de l'onde ultrasonore émise par le transducteur piézoélectrique. Ce phénomène parasite est analogue, dans le domaine acoustique, à celui connu sous le nom de "speckle" dans le domaine optique et qui donne lieu aux "grains de lumière" que l'on rencontre souvent associés à l'émission laser.

Par ailleurs, la mesure du paramètre d'atténuation, mesure qui résulte de l'analyse des signaux échographiques issus des multidiffuseurs aléatoires répartis dans le milieu étudié, exige l'enregistrement d'un grand nombre de lignes échographiques et de spectres obtenus à partir des échos produits par les multidiffuseurs contenus dans un volume relativement important, ce qui conduit à devoir déplacer le transducteur piézoélectrique pendant la mesure, d'où une réduction notable de la résolution spatiale. Il faut encore ajouter que la présence de parois spéculaires à l'intérieur du milieu soumis à exploration altère de façon sensible les échos dûs aux multidiffuseurs et, par conséquent, la détermination du paramètre d'atténuation recherché. Seule une localisation spatiale précise des réflecteurs spéculaires permettrait de diminuer leur effet néfaste sur l'analyse des signaux émis par les multidiffuseurs.

Aussi, le problème technique à résoudre par la présente invention est de réaliser un échographe ultrasonore, comportant au moins un transducteur piézoélectrique assurant l'émission et/ou la réception d'un faisceau ultrasonore d'exploration, appareil grâce auquel on obtienne simultanément une image échographique améliorée, dépourvue de "speckle", des milieux explorés, et une détermination précise du paramètre d'atténuation sans que cette mesure exige de déplacer le transducteur piézoélectrique, et donc sans perte de résolution spatiale.

La solution à ce problème technique consiste, selon la présente invention, en ce que le premier écran de phase aléatoire est déplaçable par rapport à l'axe dudit faisceau, ledit transducteur étant maintenu fixe en translation, que des moyens sont prévus pour enregistrer une ligne échographique e-(t) pour chaque position dudit écran de phase aléatoire et pour effectuer la sommation desdites lignes échographiques e(t), et en ce que ledit premier écran de phase aléatoire a au moins une face qui présente une rugosité de granulométrie aléatoire. Par "déplaçable par rapport à l'axe du faisceau ultrasonore d'exploration" on entendra ici qu'il peut être rendu mobile par rapport au faisceau ultrasonore sous l'effet d'un mouvement relatif de translation axiale, de rotation ou de rotation-translation combinées. L'effet technique essentiel de la présence d'un écran de phase aléatoire sur le trajet ultrasonore est de rompre la cohérence de l'onde traversant cet écran.

En pratique, ledit écran de phase aléatoire est réalisé sous la forme d'une plaquette d'un matériau dont la vitesse de propagation du son est différente de celle du liquide de couplage (eau, huile, etc) et dont au moins une face présente une rugosité de granulométrie aléatoire. Ledit matériau doit, en effet, présenter une vitesse de propagation du son différente de celle du liquide de couplage, afin que se produisent les différences de phase aléatoire, liées à la granulométrie. D'autre part, dans le but d'assurer une bonne sensibilité, il est préférable que le matériau constituant l'écran de phase aléatoire possède une impédance acoustique voisine de celle du liquide de couplage.

Le procédé selon l'invention est caractérisé en ce que les enveloppes des lignes échographiques enregistrées pour les différentes positions de l'écran de phase aléatoire sont sommées de façon à en déterminer les zones de réflexion spéculaire. Les maxima de ces enveloppes liés aux réflexions spéculaires étant toujours situés aux mêmes endroits, tandis que les maxima liés aux multidiffuseurs se déplacent aléatoirement, il en résulte que la sommation des enveloppes effectuée sur un grand nombre d'enregistrements (100 par exemple) renforce considérablement les maxima dus aux réflexions spéculaires et la localisation des parois d'organes, des défauts des matériaux ou autres parois spéculaires devient alors extrêmement précise. En ce sens, l'invention constitue, par rapport à l'état de la technique connue, un nouveau type d'imagerie échographique, diminuant le "speckle" échographique.

Dans le domaine du contrôle non destructif des matériaux, il est ainsi possible de distinguer un délaminage d'une grosse porosité.

En effet, après repérage, de façon classique, du défaut, la sommation des enveloppes des lignes échographiques enregistrées pour les différentes positions de l'écran de phase aléatoire, pour un délaminage (réflecteur spéculaire) renforce les maxima alors que ce n'est pas le cas lorsque le défaut est constitué par une grosse porosité (nombreux petits diffuseurs).

On notera que, du brevet US-A 4 153 894, est connu un écran de phase aléatoire interposé entre un transducteur et un objet à insonifier pour réduire le speckle. Cependant cet écran est maintenu fixe en rotation, l'application envisagée étant spécifiquement l'imagerie et non le contrôle non destructif de matériaux.

On connaît aussi de la publication Ultrasonics, vol. 18, n°6, novembre 1980, pages 273-276, IPC Business Press, Guildford, GB ; U. Röder et al. : "Scattered ultrasound for incoherent insonification in transmission imaging", un montage expérimental d'insonification en transmission dans lequel un écran de phase aléatoire est introduit entre un transducteur uniquement émetteur et un objet mince. Il s'agit là encore d'imagerie, l'image étant formée par ondes stationnaires à la surface d'un bain. L'objet se doit d'être mince, sans quoi le bruit enlèverait toute précision à l'image obtenue en transmission, et non en réflexion, et il serait peu efficace d'effectuer par cette méthode du contrôle non destructif de matériaux.

Un autre avantage de l'échographe ultrasonore et du procédé proposés concerne la détermination du paramètre $\beta$ d'atténuation du milieu exploré défini par la formule valable dans de très nombreux matériaux $\alpha(F) = \beta F$ où $\alpha(F)$ est l'atténuation et $\beta$ la pente de l'atténuation en fonction de la fréquence. On sait que ce paramètre $\beta$ est évalué à partir de la puissance spectrale moyenne $\overline{A^2_z}(F)$ qui donne, pour une profondeur d'exploration z donnée, l'énergie du signal échographique en fonction de la fréquence ultrasonore F. Connaissant pour la profondeur z la fréquence centrale $\overline{F}(z)$ de $\overline{A^2_z}(F)$, on peut déduire expérimentalement $\beta$ des variations de $\overline{F}(z)$ avec z en utilisant la relation (voir le brevet français n° 2 514 910):

$$\frac{d\overline{F}(z)}{dz} = -2\beta\sigma^2(z)$$

$\sigma(z)$ étant la largeur spectrale de $\overline{A^2_z}(F)$ pour la profondeur z. En pratique, $\sigma(z)$ varie peu avec z. $\beta$ est donc liée à la pente de $\overline{F}(z)$ en fonction de z.

Cette méthode de mesure du paramètre $\beta$ nécessite l'enregistrement d'un nombre suffisamment grand de lignes échographiques, alors que dans la technique classique ces lignes sont obtenues par déplacement mécanique du transducteur relativement à la zone explorée. Cette exigence est satisfaite, dans le cadre de la présente invention, du fait que les lignes échographiques enregistrées pour les différentes positions de l'écran de phase aléatoire sont analysées cumulativement à travers une fenêtre d'analyse qui se déplace le long desdites lignes échographiques, de façon à en extraire le paramètre d'atténuation $\beta$ du milieu exploré en fonction de la fréquence centrale $\overline{F}(z)$ et de la largeur spectrale $\sigma(z)$ de la puissance spectrale moyenne $\overline{A^2_z}(F)$.

La fenêtre d'analyse isole autour du point t (équivalant à une profondeur $z = ct/2$) une zone temporelle de largeur $\Delta t$ de la ligne échographique e(t), correspondant à une épaisseur $\Delta z = c\Delta t/2$, où c est la vitesse de l'onde ultrasonore.

L'action de l'écran de phase aléatoire permet donc de multiplier les points de mesure et revient, pour chacune de ses positions, à déplacer fictivement les multidiffuseurs de façon aléatoire les uns par rapport aux autres. Il n'est donc plus nécessaire de déplacer le transducteur piézoélectrique lui-même, avec l'avantage que cela représente quant à la résolution spatiale sur la mesure de la puissance spectrale moyenne.

De plus, connaissant maintenant la position précise des zones de réflexion spéculaire le long de la ligne échographique, il est relativement facile de s'affranchir de leur effet parasite sur la détermination des grandeurs $\overline{F}$ (z) et $\sigma$(z). Pour cela, en effet, il est prévu que la fenêtre d'analyse se déplace le long desdites lignes échographiques en évitant les zones de réflexion spéculaire.

Dans un mode particulier de réalisation du procédé selon l'invention, les puissances spectrales élémentaires $A^2_z(F)$, pour chaque position de l'écran de phase aléatoire, des lignes échographiques e(t) sont calculées par transformation de Fourier et sommées à l'intérieur de ladite fenêtre d'analyse sur toutes les positions de l'écran de phase aléatoire, afin d'obtenir la puissance spectrale moyenne $\overline{A^2_z(F)}$.

Dans un autre mode de réalisation de mise en oeuvre plus simple, la fréquence centrale $\overline{F}$ (z) des spectres des lignes échographiques est déterminée par la moyenne, pour une position donnée de la fenêtre d'analyse, du nombre de passages par zéro cumulés sur toutes les positions de l'écran de phase aléatoire, tandis que la largeur spectrale $\sigma$(z) est mesurée à partir des échos sur un plan réflecteur du signal ultrasonore émis, échos cumulés sur toutes les positions de l'écran de phase aléatoire. Cette disposition avantageuse tient compte du fait que $\sigma$(z) est pratiquement indépendant de z et que le nombre de passages par zéro est proportionnel à la fréquence centrale $\overline{F}$ (z) (voir l'article "Attenuation estimation with the zero-crossing technic phantom studies" Ultrasonic Imaging Vol. 7, p 122-132 (1985)).

Dans un autre mode de réalisation, les lignes échographiques sont filtrées à l'aide d'un filtre passe-bande étroit centré sur la fréquence F, et, pour cette fréquence F, la somme desdites enveloppes subit une conversion logarithmique de façon à en déduire l'atténuation $\alpha$(F), laquelle est divisée par la fréquence F pour obtenir le paramètre d'atténuation, conformément à la relation $\alpha$(F) = $\beta$F. On sait, en effet, que dans ce cas l'enveloppe ainsi calculée vaut exp (-$\alpha$(F)ct/2).

La description qui va suivre en regard des dessins annexés, donnés à titre d'exemples non limitatifs, fera bien comprendre en quoi consiste l'invention et comment elle peut être réalisée.

La figure 1 montre en perspective un dessin de principe de la partie transductrice d'un échographe ultrasonore selon l'invention.

Les figures 2a, 2b et 2c montrent comment la position des zones de réfexion spéculaire peuvent être extraites des lignes échographiques à l'aide de l'échographe selon l'invention.

Les figures 3a, 3b, 3c et 3d montrent comment le paramètre d'atténuation $\beta$ peut être déduit des lignes échographiques à l'aide de l'échographe selon l'invention.

La figure 4 est le schéma de la partie d'un échographe selon l'invention destinée à la détection des enveloppes des lignes échographiques.

Les figures 5a, 5b montrent deux variantes de réalisation du schéma de la partie d'un échographe selon l'invention destinée à la détermination du paramètre d'atténuation.

Les figures 6 et 7 montrent, en coupe, deux variantes de réalisation d'un échographe selon l'invention.

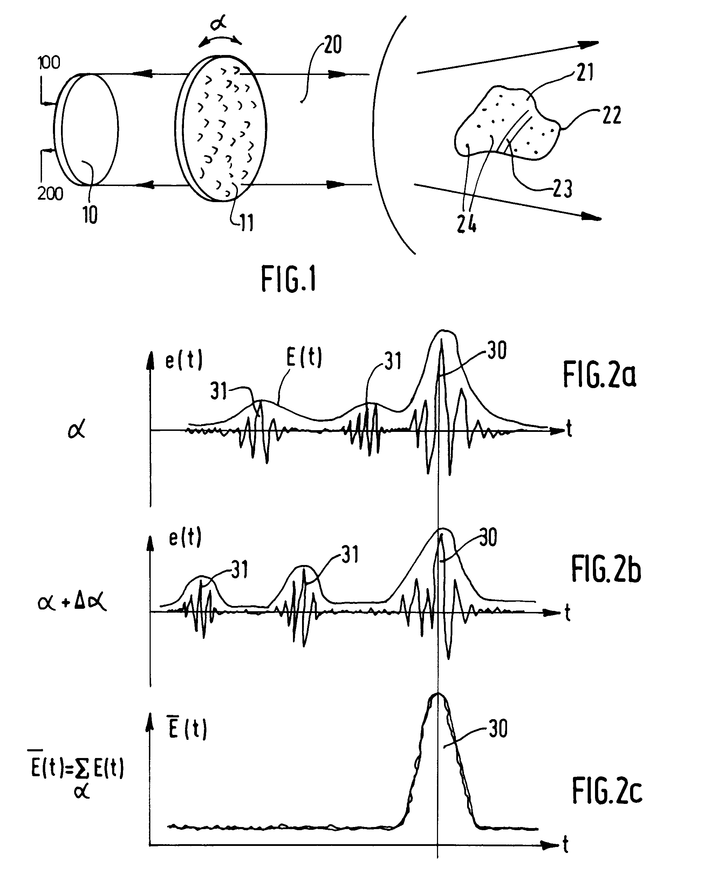

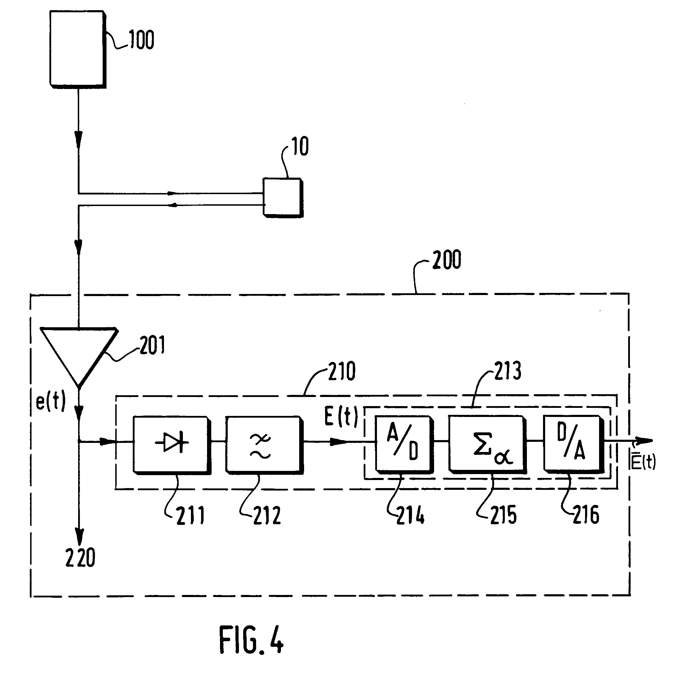

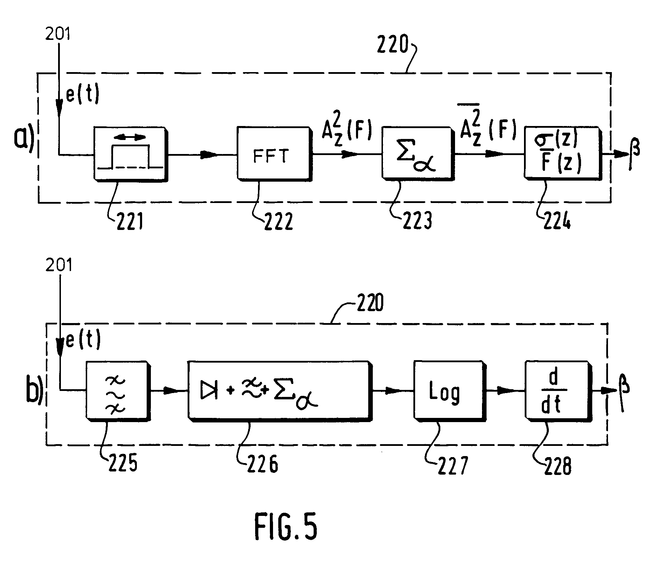

La figure 1 est un schéma de principe, vu en perspective, de la partie transductrice d'un échographe ultrasonore pour l'exploration d'un milieu (organe ou matériau) 21 composé d'une paroi 22, de réflecteurs spéculaires 23 comme une veine ou un défaut par exemple, et de multidiffuseurs 24 répartis à l'intérieur de l'objet 21. L'échographe selon l'invention comporte un transducteur piézoélectrique 10 assurant l'émission et la réception d'un faisceau ultrasonore 20 d'exploration. Ce transducteur piézoélectrique est, comme on le verra en détail aux figures 4 et 5, relié à des étages d'émission 100 et de réception 200 des signaux ultrasonores. Comme on peut le voir à la figure 1, audit transducteur piézoélectrique 10, fixe dans ce cas, est associé un écran de phase aléatoire 11 situé dans et déplaçable, ici en rotation, par rapport à l'axe d'un faisceau ultrasonore 20 d'exploration. Dans le cas représenté à la figure 1, l'écran de phase aléatoire 11 peut être déplacé en rotation autour de son axe, chacune de ses positions (100 par exemple) étant repérée par l'angle $\alpha$, et, pour chacune des positions de l'écran de phase aléatoire, une ligne échographique est enregistrée. L'écran de phase aléatoire 11 est, d'une façon générale, réalisé sous la forme d'une plaquette d'un matériau dont la vitesse de propagation du son est différente de celle du liquide de couplage et dont au moins une face présente une rugosité de granulométrie aléatoire. Parmi les matériaux pouvant être utilisés, il est préférable de choisir ceux dont l'impédance acoustique est voisine de celle du liquide de couplage, de façon à assurer une bonne sensibilité. On peut citer, comme matériaux possibles, les caoutchoucs qui ont une vitesse du son plus petite que celle de l'eau mais une densité plus grande. Ils sont cependant peu rigides et introduisent beaucoup d'atténuation du signal. Plus rigides et introduisant moins d'atténuation, certains matériaux rigides, notamment ceux connus sous la dénomination commerciale TPX ont une vitesse de propagation du son supérieure à celle de l'eau et une densité plus faible. En ce qui concerne la granulométrie du matériau, il est avantageux que la largeur des grains soit telle que la longueur de cohérence dépasse la longueur d'onde de l'onde acoustique, soit quelques dixièmes de millimètres. Quant à l'épaisseur des grains, elle doit être suffisante pour permettre des différences de phase de $\pi$.

Ainsi, l'avantage essentiel de l'invention est de multiplier les points de mesure décorrelés d'un facteur égal au nombre de positions de l'écran de phase aléatoire 11, sans qu'il soit nécessaire de déplacer le transducteur piézoélectrique 10 et donc sans perte de résolution spatiale.

Les figures 2a, 2b et 2c montrent comment une analyse de l'enveloppe des lignes échographiques obtenues à l'aide de l'appareil selon l'invention permet de déterminer avec une grande précision l'image du milieu 21 de la figure 1 quant à sa paroi 22 et à ses réflecteurs spéculaires (parois internes) 23. La figure 2a représente une ligne échographique e(t) enregistrée pour une certaine position $\alpha$ de l'écran de phase aléatoire. Cette ligne échographique comporte des échos 31 dûs aux multidiffuseurs 24 et des échos 30 dûs aux réflexions spéculaires sur des obstacles du type des parois 22 et 23. L'enveloppe E(t) de la ligne échographique e(t) présente donc des maxima dont certains sont liés aux multidiffuseurs et dont l'amplitude, non négligeable, vient perturber la localisation des zones 30 de réflexion spéculaire. A ce stade, il résulterait de l'analyse de l'enveloppe une certaine imprécision dans l'image échographique du milieu 21 soumis à exploration. La figure 2b donne l'enregistrement de la ligne échographique e(t) pour une autre position $\alpha+\Delta\alpha$ de l'écran de phase aléatoire 11, $\Delta\alpha$ étant par exemple le pas de rotation dudit écran de phase aléatoire. Cette ligne échographique a une structure analogue à celle de la figure 2a si ce n'est que les maxima de l'enveloppe E(t) liés aux multidiffuseurs ne se trouvent pas aux mêmes endroits dans la ligne échographique, alors que les maxima de E(t) liés aux réflexions spéculaires se reproduisent aux mêmes positions. Par conséquent, si, comme on le montre à la figure 2c, on somme toutes les enveloppes E(t) des lignes échographiques enregistrées pour toutes les positions $\alpha$ de l'écran de phase aléatoire, les maxima liés aux réflexions spéculaires s'ajouteront linéairement, tandis que les maxima liés aux multidiffuseurs ne s'ajouteront que quadratiquement du fait du caractère aléatoire de leur répartition.

Pour 100 positions distinctes de l'écran de phase aléatoire, la précision dans la détermination des zones de réflexion spéculaire 30 augmente donc de $\sqrt{100}=10$, ce qui est tout à fait considérable et conduit à une qualité d'images d'organes exceptionnelle.

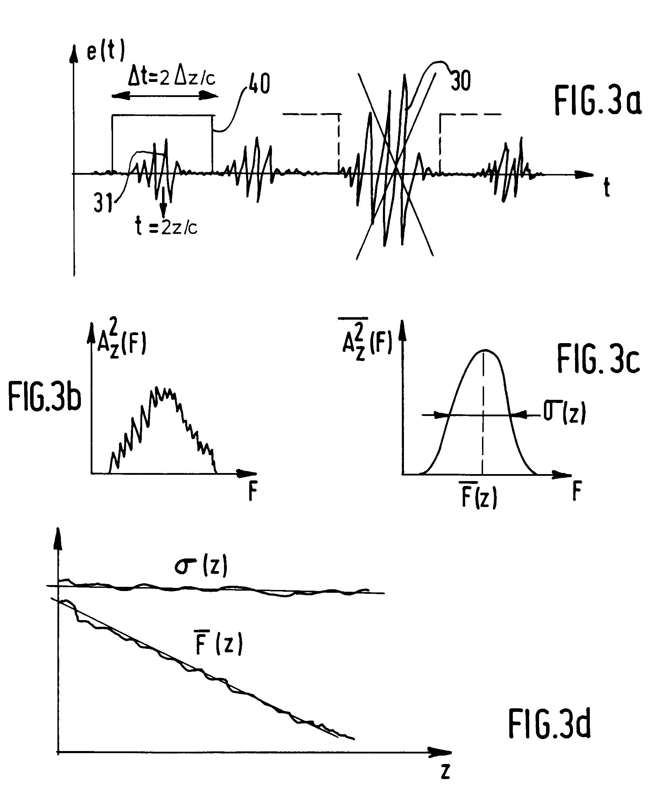

Les figures 3a, 3b, 3c et 3d montrent comment le paramètre d'atténuation $\beta$ peut être déterminé à partir de l'enregistrement des lignes échographiques e(t) dans le cas d'une analyse par transformation de Fourier.

Ainsi que l'illustre la figure 3a, les lignes échographiques e(t) enregistrées pour chaque position $\alpha$ de l'écran de phase aléatoire 11 sont analysées cumulativement à travers une fenêtre d'analyse 40 qui se déplace le long des lignes échographiques e(t). Cette fenêtre d'analyse 40 définit une zone temporelle de largeur $\Delta t$ correspondant à une épaisseur de tissus $\Delta z = c\Delta t/2$. La détermination du paramètre d'atténuation $\beta$ repose sur l'analyse des échos 31 émis par les multidiffuseurs 24 répartis dans le milieu 21 exploré. En ce sens les zones de réflexion spéculaire 30 correspondent à des signaux parasites. Le traitement précédemment décrit à l'appui des figures 2a, 2b et 2c permet de s'affranchir de l'effet néfaste des zones de réflexion spéculaire. En effet, ces zones de réflexion spéculaire 30 étant parfaitement localisées dans les lignes échographiques, il suffit, comme l'indique la figure 3a, de déplacer la fenêtre d'analyse 40 le long des lignes échographiques en évitant les zones connues de réflexion spéculaire.

Pour une position donnée de la fenêtre d'analyse 40 le long de la ligne échographique e(t), position caractérisée par le temps t, c'est à dire aussi par la profondeur $z=ct/2$, et pour une position donnée $\alpha$ de l'écran de phase aléatoire 11, la puissance spectrale correspondante $A^2_z(F)$ est, dans le cas de la figure 3b, calculée par transformation de Fourier. Cette puissance en elle-même est en général de qualité médiocre et difficilement exploitable en vue d'une détermination précise du paramètre d'atténuation $\beta$, car elle présente de nombreuses cannelures dues à la présence de plusieurs échos des diffuseurs dans la fenêtre d'exploration. Par contre, et c'est un avantage essentiel de l'invention, lorsque l'on somme à l'intérieur de la même fenêtre d'analyse 40 les puissances spectrales élémentaires $A^2_z(F)$ calculés par toutes les positions de l'écran de phase aléatoire, on obtient la puissance spectrale moyenne $\overline{A^2_z}(F)$ lissée (figure 3c) de bien meilleure qualité et qui permet en particulier de déterminer avec une grande précision, pour chaque profondeur z, la fréquence cen-

trale $\overline{F}(z)$ et la largeur spectrale $\sigma(z)$ de la puissance spectrale moyenne $\overline{A^2_z}(F)$. Il faut noter que cette amélioration est obtenue sans déplacer le transducteur piézoélectrique 10, c'est à dire sans dégradation de la résolution spatiale.

Connaissant les variations de $\overline{F}(z)$ et de $\sigma(z)$ avec z (figure 3d), on en déduit le paramètre d'atténuation $\beta$ recherché à l'aide de la relation

$$\frac{d\overline{F}(z)}{dz} = -2\beta\sigma^2(z)$$

Une autre méthode permettant de calculer $\overline{F}(z)$ et $\sigma(z)$ sans utiliser la technique, toujours lourde à mettre en oeuvre, de la transformation de Fourier consiste à déterminer la fréquence centrale $\overline{F}(z)$ à partir de la moyenne, sur toutes les positions $\alpha$ de l'écran de phase aléatoire, du nombre de passages par zéro des lignes échographiques à l'intérieur de la fenêtre d'analyse 40 centrée sur t (ou z = ct/2). On sait en effet que ce nombre de passages par zéro est proportionnel à la fréquence centrale $\overline{F}(z)$. Quant à la largeur spectrale $\sigma(z)$, on peut tirer profit du fait qu'elle ne varie pratiquement pas avec la profondeur z en la calculant une fois pour toutes à partir de l'enregistrement d'échos sur un plan réflecteur du signal ultrasonore émis, échos cumulés sur toutes les positions $\alpha$ de l'écran de phase aléatoire 11.

En outre et pour tous les modes de réalisation envisagés, il est possible de prendre en compte les effets de la diffraction selon une méthode décrite dans le brevet français n° 2 554 238, et qui consiste essentiellement en ce que la courbe de diffraction moyenne $\overline{D^2_z}(F)$ du transducteur piézoélectrique muni dudit écran de phase aléatoire 11 est enregistrée préalablement pour chaque profondeur d'exploration z et sommée sur toutes les positions $\alpha$ de l'écran de phase aléatoire 11.

La figure 4 montre, sous forme schématique, la partie d'un échographe ultrasonore selon l'invention, destinée à la détection de l'enveloppe moyenne $\overline{E}$ (t) des lignes échographiques e(t). Comme l'indique la figure 4, le transducteur 10 est relié, d'une part, à un étage d'émission 100 comportant essentiellement, et de façon classique, un générateur de signaux électriques d'excitation, et, d'autre part, à un étage de réception 200 qui comprend, à son entrée, un amplificateur 201 haute-fréquence, incluant la compensation de gain en fonction de la profondeur. L'amplificateur 201 est suivi de deux voies parallèles de traitement, l'une dirigée vers un étage 210 de détection d'enveloppes, et l'autre dirigée vers un étage 220 de mesure du paramètre d'atténuation $\beta$. L'étage 210 de détection d'enveloppes comporte un redresseur 211 associé à un filtre passe-bas 212. Le signal ainsi redressé et filtré correspond à l'enveloppe E(t) des lignes échographiques e(t) pour une position de l'écran de phase aléatoire. Afin d'obtenir $\overline{E}$ (t) résultant du cumul des mesures pour toutes les positions de l'écran de phase aléatoire, le signal d'enveloppe E-(t) issu du filtre passe-bas 212 est sommée par un additionneur 213 comportant un convertisseur analogique-digital 214, une mémoire digitale 215 dans laquelle sont additionnés les signaux digitaux provenant du convertisseur 214. Enfin, l'enveloppe $\overline{E}$ -(t) obtenue sous forme digitale est convertie en signal analogique à l'aide du convertisseur digital-analogique 216.

La figure 5 montre, sous deux variantes, la partie 220 de l'échographe ultrasonore de la figure 4, destinée à la détermination du paramètre d'atténuation $\beta$. Selon la variante en relation avec les figures 3a à 3d (voir la figure 5a), les lignes échographiques e(t) sont analysées, pour chaque position de l'écran de phase aléatoire, à l'intérieur d'une fenêtre glissante 40 provenant d'un générateur de fenêtre 221. Les puissances spectrales élémentaires $A^2_z(F)$ sont ensuite calculées par un étage 222 de transformation de Fourier rapide. Puis, les puissances spectrales élémentaires $A^2_z(F)$ sont sommées sur toutes les positions $\alpha$ de l'écran de phase aléatoire par un additionneur 223 analogue à l'additionneur 215 de la figure 4. L'unité de traitement 224 calcule ensuite les paramètres $\sigma(z)$ et $\overline{F}(z)$ de la puissance spectrale moyenne $\overline{A^2_z}(F)$ obtenue en sortie de l'additionneur 223, ce qui permet finalement de déduire $\beta$ des variations de $\sigma(t)$ et $\overline{F}(z)$ en fonction de z.

Selon la variante b) de la figure 5, le signal échographique provenant de l'amplificateur 201 est filtré à la fréquence F par un filtre passe-bande étroit 225 centré sur F. L'enveloppe moyenne de ce signal filtré est calculée par un détecteur d'enveloppe 226, du type de celui décrit à la figure 4. L'enveloppe moyenne ainsi obtenue est une courbe exponentielle décroissante exp ($-\alpha$(F)ct/2), où $\alpha$-(F) est l'atténuation pour une fréquence F. L'amplificateur logarithmique 227 transforme cette courbe exponentielle en une droite de pente $-\alpha$(F)c/2. En mesurant cette pente à l'aide de l'étage de différentiation 228, on obtient l'atténuation $\alpha$(F). En changeant la fréquence centrale F du filtre passe-bande 225, on peut étudier les variations de $\alpha$(F) en fonction de F et en déduire $\beta$ par $\beta = \alpha$(F)/F.

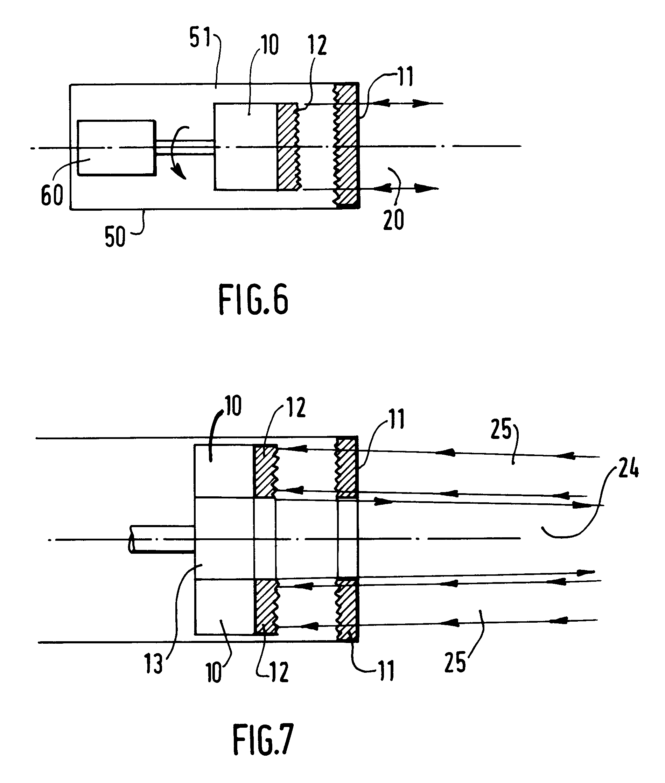

La figure 6 montre par une vue en coupe un mode particulier de réalisation d'un appareil selon l'invention, dans lequel ledit transducteur piézoélectrique 10 est associé à deux écrans de phase aléatoire 11, 12. Plus spécialement, le premier écran de phase aléatoire 11 qui est fixe forme la fenêtre d'un boîtier 50 rempli d'un liquide 51 d'adaptation acoustique et enfermant le transducteur piézoélectrique 10 lui-même muni du deuxième écran de phase aléatoire 12. Transducteur piézoélectrique 10 et écran de phase aléatoire 12 sont mis en rotation autour de leur axe à l'aide d'un moteur 60. L'avantage de disposer de deux écrans de phase aléatoire mobiles l'un par rapport à l'autre est de diminuer l'angle de rotation nécessaire pour obtenir des lignes échographiques décorrélées et donc est de permettre d'utiliser des pas de déplacement relatif de l'écran de phase aléatoire mobile plus petits et donc d'augmenter encore le nombre de points de mesure décorrélés. Une autre possibilité consiste à laisser fixe le transducteur 10, à mettre en rotation l'écran de phase 12 séparé du transducteur, et à laisser l'écran de phase 11 toujours fixe.

Contrairement à l'exemple de la figure 6 qui montrait un transducteur piézoélectrique 10 assurant à la fois l'émission et la réception du faisceau ultrasonore 20, l'appareil de la figure 7 comporte deux transducteurs piézoélectriques 13, 10 dont le premier 13 assure l'émission de la partie incidente 24 du faisceau ultrasonore 20 et dont le deuxième 10 assure la réception de la partie réfléchie 25 dudit faisceau ultrasonore 20. Dans le but de ne pas dégrader le faisceau incident 24 par la présence sur son trajet d'un écran de phase aléatoire, il est prévu que seul ledit deuxième transducteur piézoélectrique 10 est associé à un écran de phase aléatoire 11 déplaçable dans la partie réfléchie 25 du faisceau ultrasonore. Comme le montre la figure 7, on peut également associer au transducteur piézoélectrique 10 un deuxième écran de phase aléatoire 12 fixe par rapport au faisceau réfléchi 25. Dans l'exemple de la figure, le transducteur piézoélectrique 10, ainsi que les écrans de phase aléatoire 11 et 12 ont une forme annulaire. Le même principe peut aussi être utilisé avec des écrans de phase aléatoire placés uniquement devant le transducteur 13 au lieu du transducteur 10.

En outre, les transducteurs 13 et 10 peuvent être soit des transducteurs plans, soit des transducteurs focalisés taillés en forme de coupelle sphérique.

## Revendications

1. Echographe ultrasonore pour la caractérisation de tissus d'organes ou de matériaux comportant au moins un transducteur piézoélectrique (10) assurant l'émission et la réception d'un faisceau ultrasonore (20) d'exploration, dans lequel audit transducteur piézoélectrique (10) est associé un premier écran de phase aléatoire (11) réalisé sous la forme d'une plaquette d'un matériau dont la vitesse de propagation du son est différente de celle de l'eau et situé dans le faisceau ultrasonore (20) d'exploration, caractérisé en ce que le premier écran de phase alétoire est déplaçable par rapport à l'axe dudit faisceau, ledit faisceau transducteur étant maintenu fixe en translation, que des moyens sont prévus pour enregistrer une ligne échographique e(t) pour chaque position ($\alpha$) dudit écran de phase aléatoire et pour effectuer la sommation desdites lignes échographiques e(t), et en ce que ledit écran de phase aléatoire (11) a au moins une face qui présente une rugosité de granulométrie aléatoire.

2. Echographe selon la revendication 1, caractérisé en ce que la granulométrie de l'écran de phase aléatoire (11) induit des différences de phase maximales égales à $\pi$.

3. Echographe selon l'une des revendications 1 ou 2, caractérisé en ce que la largeur des grains de l'écran de phase aléatoire (11) est telle que la longueur de cohérence dépasse la longueur d'onde du faisceau ultrasonore (20).

4. Echographe selon l'une quelconque des revendications 1 à 3, caractérisé en ce que le transducteur (10) est fixe et le premier écran de phase aléatoire (11) mobile dans le faisceau ultrasonore (20).

5. Echographe selon l'une quelconque des revendications 1 à 4, caractérisé en ce qu'audit transducteur piézoélectrique (10) est associé un deuxième écran de phase aléatoire (12) qui est fixe par rapport au faisceau ultrasonore (20) d'exploration.

6. Echographe selon la revendication 5, caractérisé en ce qu'il comporte, dans un boîtier (50) rempli d'un liquide (51) d'adaptation acoustique, ledit transducteur piézoélectrique muni d'un deuxième écran de phase aléatoire (12), ledit premier écran de phase aléatoire (11) qui est fixe mais par rapport auquel le faisceau se déplace et qui constitue une fenêtre du boitier et un moteur (60) faisant tourner ledit transducteur piézoélectrique (10) et le deuxième écran de phase aléatoire (12) autour de leur axe.

7. Echographe selon l'une quelconque des revendications 1 à 5, caractérisé en ce qu'il comporte un premier transducteur piézoélectrique (13) assurant l'émission de la partie incidente (24) du faisceau ultrasonore (20) d'exploration, ainsi qu'un deuxième transducteur piézoélectrique (10) assurant la réception de la partie réfléchie (25) du faisceau ultrasonore (20) d'exploration, et en ce que seul ledit deuxième transducteur piézoélectrique (10) est associé audit premier écran de phase aléatoire (11) par rapport auquel le faisceau ultrasonore se déplace.

8. Echographe selon l'une quelconque des revendications 1 à 7, caractérisé en ce qu'il comporte des moyens (211,212) pour détecter les enveloppes (E(t)) des lignes échographiques (e(t)) enregistrées pour les différentes positions ($\alpha$) du premier écran de phase aléatoire (11) et des moyens (213) pour sommer les enveloppes de façon à déterminer les zones de réflexion spéculaire (30).

9. Echographe selon la revendication 8, caractérisé en ce qu'il comporte des moyens (221) pour analyser les lignes échographiques (e(t)) enregistrées pour les différentes positions ($\alpha$) du premier écran de phase aléatoire (11) cumulativement à travers une fenêtre d'analyse (40) qui se déplace le long desdites lignes échographiques (e(t)), ainsi que des moyens (222, 223, 224) pour en extraire le paramètre d'atténuation $\beta$ du milieu exploré en fonction de la fréquence centrale $\overline{F}(z)$ et de la largeur spectrale $\underline{\sigma(z)}$ de la puissance spectrale moyenne $\overline{A^2_z(F)}$ qui donne l'amplitude du signal échographique à l'intérieur de ladite fenêtre d'analyse (40) pour une profondeur d'exploration z donnée.

10. Echographe selon la revendication 9, caractérisé en ce qu'il comporte un étage (222) de transformation de Fourier rapide pour calculer, pour chaque position du premier écran de phase aléatoire, les puissances spectrales élémentaires ($A^2_z(F)$) des lignes échographiques (e(t)) ainsi qu'un additionneur (223) pour sommer les puissances spectrales élémentaires à l'intérieur de ladite fenêtre d'analyse (40) sur toutes les positions ($\alpha$) du premier écran de phase aléatoire (11), de façon à obtenir la puissance spectrale moyenne $\overline{A^2_z(F)}$.

11. Echographe selon la revendication 8, caractérisé en ce qu'il comporte un filtre passe-bande étroit (225) centré sur une fréquence F pour filtrer les lignes échographiques (e(t)) suivi d'un détecteur d'enveloppe avec additionneur (226), d'un amplificateur logarithmique (227) et d'un étage de différentiation (228) de façon à en déduire, pour cette fréquence F, l'atténuation $\alpha(F)$, ainsi que des moyens pour diviser cette atténuation par la fréquence F pour obtenir le paramètre d'atténuation ($\beta$).

12. Procédé d'exploration d'un milieu par échographie ultrasonore par la mise en oeuvre d'un échographe selon la revendication 1 comportant les étapes consistant à :

- émettre, au moyen d'un transducteur, un faisceau ultrasonore vers un milieu à explorer selon un diamètre de ce milieu,
- recevoir, au moyen dudit transducteur, en écho le faisceau ultrasonore après son interaction avec le milieu,
- introduire de façon séquentielle une pluralité de décalages de phase aléatoires compris entre 0 et $\pi$ dans ledit faisceau au moyen d'un écran de phase aléatoire interposé dans ledit faisceau pour chacune parmi plusieurs positions ($\alpha$) de cet écran par rapport au faisceau, ledit écran de phase aléatoire (11) étant réalisé sous la forme d'une plaquette d'un matériau dont la vitesse de propagation du son est différente de celle de l'eau et dont au moins une face présente une rugosité de granulométrie aléatoire, et

caractérisé en ce que les lignes échographiques (e(t)) produites à partir dudit faisceau reçu sont enregistrées pour chaque position dudit écran, leldit transducteur étant maintenu fixe en translation et en ce que les enveloppes (E(t)) des lignes échographiques (e(t)) enregistrées pour les différentes positions de l'écran de phase aléatoire (11) sont sommées de façon à déterminer les zones de réflexion spéculaire (30).

13. Procédé selon la revendication 12 caractérisé en ce que les lignes échographiques (e(t)) enregistrées pour les différentes positions ($\alpha$) du premier écran de phase aléatoire (11) sont analysées cumulativement à travers une fenêtre d'analyse (40) qui se déplace le long desdites lignes échographiques (e(t)), de façon à en extraire le paramètre d'atténuation $\beta$ du milieu exploré en fonction de la fréquence centrale $\overline{F}(z)$ et de la largeur spectrale $\sigma(z)$ de la puissance spectrale moyenne $\overline{A^2_z(F)}$ qui donne l'amplitude du signal échographique à l'intérieur de ladite fenêtre d'analyse (40) pour une profondeur d'exploration z donnée.

14. Procédé selon la revendication 13, caractérisé en ce que la fenêtre d'analyse (40) se déplace le long desdites lignes échographiques (e(t)) en évitant les zones de réflexion spéculaire (30).

15. Procédé selon l'une des revendications 13 ou 14, caractérisé en ce que les puissances spectrales élémentaires ($A^2_z(F)$), pour chaque position de l'écran de phase aléatoire, des lignes échographiques (e(t)) sont calculés par transformation de Fourier et sommés à l'intérieur de ladite fenêtre d'analyse (40) sur toutes les positions ($\alpha$) du premier écran de phase aléatoire (11), de façon à obtenir la puissance spectrale moyenne $\overline{A^2_z(F)}$.

16. Procédé selon l'une des revendications 13 ou 14, caractérisé en ce que la fréquence centrale $\overline{F}(z)$ des spectres des lignes échographiques (e(t)) est déterminée par la moyenne, pour une position donnée de la fenêtre d'analyse (40) du nombre de passages par zéro cumulés sur toutes les positions ($\alpha$) du premier écran de phase aléatoire (11), tandis que la largeur spectrale $\sigma(z)$ est mesurée à partir des échos sur un plan réflecteur du signal ultrasonore émis, échos cumulés sur toutes les positions ($\alpha$) du premier écran de phase aléatoire (11).

17. Procédé selon la revendication 12, caractérisé en ce que les lignes échographiques (e(t)) sont filtrées à l'aide d'un filtre passe-bande étroit centré sur une fréquence F, et en ce que, pour cette fréquence F, la somme desdites enveloppes subit une conversion logarithmique de façon à en déduire l'atténuation $\alpha$(F), laquelle est divisée par la fréquence F pour obtenir le paramètre d'atténuation ($\beta$).

18. Procédé selon l'une quelconque des revendications 12 à 17, caractérisé en ce que la courbe de diffraction moyenne $\overline{D^2_z(F)}$ du transducteur piézoélectrique muni dudit premier écran de phase aléatoire (11) est enregistrée préalablement pour chaque profondeur d'exploration (z) et sommée sur toutes les positions ($\alpha$) du premier écran de phase aléatoire (11).

**Claims**

1. An ultrasonic echograph for characterizing tissues of organs or materials, comprising at least one piezoelectric transducer (10) for the transmission and/or reception of an ultrasonic scanning beam (20), with said piezoelectric transducer (10) there being associated a first random phase screen (11) realized in the form of a plate of a material whose sound propagation speed deviates from that of water and which is arranged in the ultrasonic scanning beam (20), characterized in that the first random phase screen is displaceable with respect to the axis of this beam, said transducer beam being maintained fixed in translation, there being provided means for recording an echographic line e(t) for each position ($\alpha$) of said random phase screen, and for summing said echographic lines e(t), and in that said random phase screen (11) has at least one face having a random granular roughness.

2. An echograph as claimed in Claim 1, characterized in that the granulation of the random phase screen (11) introduces maximum phase differences equal to $\pi$.

3. An echograph as claimed in one of the Claims 1 or 2, characterized in that the size of the grains of the random phase screen (11) is such that the coherence length exceeds the wavelength of the ultrasonic beam (20).

4. An echograph as claimed in any one of the Claims 1 to 3, characterized in that the transducer (10) is stationary and the first random phase screen (11) is movable in the ultrasonic beam (20).

5. An echograph as claimed in any one of the Claims 1 to 4, characterized in that with said piezoelectric transducer (10) there is associated a second random phase screen (12) which is stationary with respect to the ultrasonic scanning beam (20).

6. An echograph as claimed in Claim 5, characterized in that it comprises, accommodated in a container (50) filled with an acoustic matching liquid (51), said piezoelectric transducer provided with a second random phase screen (12), said first random phase screen (11) which is stationary but with respect to which the beam moves and which consists a window of the container, and a motor (60) which rotates the piezoelectric transducer (10) and the second random phase screen (12) about their axis.

7. An echograph as claimed in any one of the Claims 1 to 5, characterized in that it comprises a first piezoelectric transducer (13) for the transmission of the incident part (24) of the ultrasonic scanning beam (20) as well as a second piezoelectric transducer (10) for the reception of the reflected part (25) of the ultrasonic scanning beam (20), only said second piezoelectric transducer (10) being associated with said first random phase screen (11) with respect to which the ultrasonic beam moves.

8. An echograph as claimed in any one of the Claims 1 to 7, characterized in that it comprises means (211, 212) for the detection of the envelopes (E(t)) of the echographic lines (e(t)) recorded for the various positions ($\alpha$) of the random phase screen (11) and means (213) for summing the envelopes in order to determine the specular reflection zones (30).

9. An echograph as claimed in Claim 8, characterized in that it comprises means (221) for cumulatively analyzing the echographic lines (e(t)) recorded for the various positions ($\alpha$) of the first random phase screen (11) via an analysis window (14) which is displaced along said echographic lines (e(t)), an also comprises means (222, 223, 224) for extracting therefrom the attenuation parameter $\beta$ of the medium scanned as a function of the central frequency $\overline{F}(z)$ and the spectral width $\sigma(z)$ of the mean spectral power $\overline{A^2_z(F)}$ which offers the amplitude of the echographic signal inside said analysis window (40) for a given scanning depth z.

10. An echograph as claimed in Claim 9, characterized in that it comprises a fast Fourier transformation stage (222) for calculating, for each position of the first random phase screen, the elementary spectral powers ($A^2_z(F)$) of the echographic lines (e(t)), and also comprises an adder (223) for summing the elementary spectral powers inside said analysis window (40) for all positions ($\alpha$) of the first random phase screen (11) in order to obtain the mean spectral power $\overline{A^2_z(F)}$.

11. An echograph as claimed in Claim 8, characterized in that it comprises a narrow bandpass filter (225) which is centred around a frequency F for filtering the echographic lines (e(t)), followed by an envelope detector with an adder (226), a logarithmic amplifier (227) and a differentiation stage (228) for deriving therefrom, for said frequency F, the attenuation $\alpha(F)$, as well as means for dividing said attenuation by the frequency F in order to obtain the attenuation parameter ($\beta$).

12. A method of scanning a medium by ultrasonic echography by means of an echograph as claimed in claim 1, comprising the steps of:
    - transmitting, by means of a transducer, an ultrasonic beam to a medium to be scanned in conformity with a diameter of this media,
    - receiving, by means of said transducer, an echo of the ultrasonic beam after its interaction with the medium,
    - introducing sequentially a plurality of random phase shifts between 0 and $\pi$ in said beam by means of a random phase screen arranged in said beam for each one of several positions ($\alpha$) of said

screen relative to the beam, said random phase screen (11) being realized as a plate of a material whose sound propagation speed deviates from that of water and at least one surface of which has a random granular roughness,
characterized in that the echographic lines (e(t)) formed from said beam received are recorded for each position of said screen, said transducer being maintained fixed in translation, and in that the envelopes (E(t)) of the echographic lines (e(t)) recorded for the various positions of the random phase screen (11) are summed so as to determine the specular reflection zones (30).

13. A method as claimed in Claim 12, characterized in that he echographic lines (e(t)) recorded for the various positions ($\alpha$) of the first random phase screen (11) are cumulatively analyzed via an analysis window (40) which is displaced along said echographic lines (e(t)) in order to extract therefrom the attenuation parameter $\beta$ of the object scanned as a function of the central frequency $\overline{F}(z)$ and the spectral width $\sigma(z)$ of the mean spectral power $\overline{A^2_z(F)}$ which offers the amplitude of the echographic signal within said analysis window (40) for a given scanning depth z.

14. A method as claimed in Claim 13, characterized in that the analysis window (40) is displaced along said echographic lines (e(t)) so that the specular reflection zones (30) are avoided.

15. A method as claimed in one of the Claims 13 or 14, characterized in that for each position of the random phase screen the elementary spectral powers ($A^2_z(F)$) of the echographic lines (e(t)) are calculated by Fourier transformation and are summed within said analysis window (40) for all positions ($\alpha$) of the first random phase screen (11) in order to obtain the mean spectral power $\overline{A^2_z(F)}$.

16. A method as claimed in one of the Claims 13 or 14, characterized in that the central frequency $\overline{F}(z)$ of the spectra of the echographic lines (e(t)) is determined, for a given position of the analysis window (40), by the mean value of the number of zero-crossings accumulated for all positions ($\alpha$) of the first random phase screen (11), the spectral width $\alpha(z)$ being measured on the basis of the echoes from a reflector surface for the transmitted ultrasonic signal, which echoes are accumulated for all positions

($\alpha$) of the first random phase screen (11).

17. A method as claimed in Claim 12, characterized in that the echographic lines (e(t)) are filtered by means of a narrow band-pass filter which is centred around a frequency F, for which frequency F the sum of said envelopes is subjected to a logarithmic conversion in order to derive therefrom the attenuation a(F) which is divided by the frequency F in order to obtain the attenuation parameter ($\beta$).

18. A method as claimed in any one of the Claims 12 to 17, characterized in that the mean diffraction curve $D^2_z(F)$ of the piezoelectric transducer provided with said first random phase screen (11) is recorded in advance for each scanning depth (z) and is summed for all positions ($\alpha$) of the first random phase screen (11).

## Patentansprüche

1. Ultraschall-Echographiegerät für die Kennzeichnung von Organgeweben oder von Werkstoffen mit wenigstens einem piezoelektrischen Wandler (10) zur Gewährleistung der Emission und/oder des Empfangs eines Ultraschall-Untersuchungsbündels (20), in dem dem piezoelektrischen Wandler (10) ein erster Zufallsphasen-Schirm (11) zugeordnet ist, der in Form einer Werkstoffplatte verwirklicht ist, deren Schallfortpflanzungsgeschwindigkeit abweicht von der des Wassers und die sich im Ultraschall-Untersuchungsbündel (20) befindet, dadurch gekennzeichnet, daß der erste Zufallsphasen-Schirm in bezug auf die Achse dieses Bündels verschiebbar ist, wobei der Bündelwandler in Translation nicht bewegbar ist, daß Mittel zum Aufzeichnen einer echographischen Linie e(t) für jede Position ($\alpha$) des Zufallsphasen-Schirms vorgesehen sind, um die Summierung der echographischen Linien e(t) durchzuführen, und der erste Zufallsphasen-Schirm (11) wenigstens ein Fläche enthält, die eine Zufallskörnungsunebenheit aufweist.

2. Ultraschall-Echographiegerät nach Anspruch 1, dadurch gekennzeichnet, daß die Körnung des Zufallsphasen-Schirms (11) maximale Phasenunterschiede gleich $\pi$ induziert.

3. Ultraschall-Echographiegerät nach Anspruch 1 oder 2, dadurch gekennzeichnet, daß die Korngröße des Zufallsphasen-Schirms (11) derart ist, daß die Kohärenzlänge größer ist als die Wellenlänge des Ultraschallbündels (20).

4. Ultraschall-Echographiegerät nach einem der Ansprüche 1 bis 3, dadurch gekennzeichnet, daß der Wandler (10) fest steht und der erste Zufallsphasen-Schirm (11) im Ultraschallbündel (20) bewegbar ist.

5. Ultraschall-Echographiegerät nach einem der Ansprüche 1 bis 4, dadurch gekennzeichnet, daß mit dem piezoelektrischen Wandler (10) ein zweiter Zufallsphasen-Schirm (12) verknüpft ist, der in bezug auf das Ultraschall-Untersuchungsbündel (20) fest steht.

6. Ultraschall-Echographiegerät nach Anspruch 5, dadurch gekennzeichnet, daß es in einem mit einer akustischen Ausgleichsflüssigkeit (51) gefüllten Gehäuse den piezoelektrischen Wandler, der mit einem zweiten Zufallsphasen-Schirm (12) versehen ist, den ersten Zufallsphasen-Schirm (11), der fest steht, aber in bezug auf den sich das Bündel verschiebt und der ein Fenster im Gehäuse bildet, und einen Motor (60) zum Drehen des piezoelektrischen Wandlers (10) und den zweiten Zufallsphasen-Schirm (12) um ihre Achse enthält.

7. Ultraschall-Echographiegerät nach einem der Ansprüche 1 bis 5, dadurch gekennzeichnet, daß ein erster piezoelektrischer Wandler (13) vorgesehen ist, der die Emission des auffallenden Teils (24) des Ultraschall-Untersuchungsbündels (20) gewährleistet, sowie ein zweiter piezoelektrischer Wandler (10) vorgesehen ist, der den Empfang des reflektierten Teils (25) des Ultraschall-Untersuchungsbündels (20) gewährleistet, und daß nur der zweite piezoelektrische Wandler (10) mit dem ersten Zufallsphasen-Schirm (11) verknüpft ist, in bezug auf den sich das Ultraschallbündel verschiebt.

8. Ultraschall-Echographiegerät nach einem der Ansprüche 1 bis 7, dadurch gekennzeichnet, daß Mittel (211, 212) zum Detektieren der Umhüllenden (E(t)) der Echographielinien (e(t)), die für die verschiedenen Positionen ($\alpha$) des ersten Zufallsphasenschirms (11) aufgezeichnet sind, und Mittel (213) zum Summieren der Umhüllenden zum Bestimmen der spiegelnden Reflexionszonen (30) vorgesehen sind.

9. Ultraschall-Echographiegerät nach Anspruch 8, dadurch gekennzeichnet, daß Mittel (221) zum kumulativen Analysieren der für die verschiedenen Positionen ($\alpha$) des ersten Zufallsphasen-Schirms (11) aufgezeichneten Echographielinien (e(t)) durch ein Analysefenster (40), das sich auf den Echographielinien (e(t)) verschiebt, und Mittel (222, 223, 224) zum Ablei-

ten des Abschwächungsparameters $\beta$ des untersuchten Mediums abhängig von der mittleren Frequenz $\overline{F}(z)$ und von der Spekträlgröße $\sigma(z)$ der mittleren Spektralleistung $\overline{A^2_z(F)}$ vorgesehen sind, der die Amplitude des Echographiesignals im Inneren des Analysefensters (40) für eine vorgegebene Untersuchungstiefe z liefert.

10. Ultraschall-Echographiegerät nach Anspruch 9, dadurch gekennzeichnet, daß es eine schnelle Fourier-Transformationsstufe (222) aufweist zum Berechnen der der Elementar-Spektralleistungen $A^2_z(F)$ der Echographielinien e(t) für jede Stellung des Zufallsphasen-Schirms sowie eine Addierstufe (223) zum Summieren der Elementar-Spektralleistungen im Inneren des Analysefensters (40) in allen Stellungen $(\alpha)$ des ersten Zufallsphasen-Schirms (11) zum Erhalten der mittleren Spektralleistung $\overline{A^2z(F.)}$

11. Ultraschall-Echographiegerät nach Anspruch 8, dadurch gekennzeichnet, daß ein auf eine Frequenz F zum Filtern der Echographielinien (e-(t)) zentriertes Filter (225) mit schmalen Durchlaßband vorgesehen ist, dem ein Umhüllendendetektor mit Addierer (226), ein logarithmischer Verstärker (227) und eine Differenzierstufe (228) derart, daß sie für diese Frequenz F die Abschwächung $\alpha(F)$ daraus ableitet, sowie Mittel zum Teilen dieser Abschwächung durch die Frequenz F zum Erhalten des Abschwächungsparameters $(\beta)$ nachgeschaltet sind.

12. Ultraschall-Echographieverfahren zum Untersuchen von Medien durch den Einsatz eines Ultraschall-Echographiegeräts nach Anspruch 1 mit folgenden Schritten:
- mit Hilfe eines Wandlers ein Ultraschallbündel nach einem zu untersuchenden Medium anhand eines Durchmessers dieses Mediums aussenden,
- mit Hilfe des Wandlers ein Echo des Ultraschallbündels nach seiner Wechselwirkung mit dem Medium einfangen,
- eine Anzahl von Zufallsphasenverschiebungen zwischen 0 und $\pi$ im Bündel mittels eines im Bündel angeordneten Zufallsphasen-Schirms für jede der mehreren Positionen $(\alpha)$ dieses Schirms in bezug auf das Bündel sequentiell einführen, wobei der Zufallsphasen-Schirm (11) in Form einer Platte eines Werkstoffs verwirklicht wird, dessen Schallfortpflanzungsgeschwindigkeit von der des Wassers abweicht, und von der wenigstens eine Fläche eine Zufallskörnungsunebenheit aufweist, dadurch gekennzeichnet, daß die ausgehend vom empfangenen Bündel erzeugten Echographielinien (e(t)) für jede Position des Schirms aufgezeichnet werden, wobei der Wandler in Translation fest steht, und daß die Umhüllenden (E(t)) der für die verschiedenen Stellungen des Zufallsphasen-Schirms (11) aufgezeichneten echographischen Linien (e(t)) summiert werden, um daraus die spiegelnden Reflexionszonen (30) zu bestimmen.

13. Verfahren nach Anspruch 12, dadurch gekennzeichnet, daß die für die verschiedenen Positionen $(\alpha)$ des ersten Zufallsphasen-Schirms (11) aufgezeichneten Echographielinien (e(t)) durch ein Analysefenster (40), das sich auf den Echographielinien (e(t)) verschiebt, derart kumulativ analysiert werden, daß der Abschwächungsparameters $\beta$ des untersuchten Mediums abhängig von der mittleren Frequenz $\overline{F}(z)$ und von der Spektralgröße $\sigma(z)$ der mittleren Spektralleistung $\overline{A^2_z(F)}$ abgeleitet wird, der die Amplitude des Echographiesignals im Inneren des Analysefensters (40) für eine vorgegebene Untersuchungstiefe z liefert.

14. Verfahren nach Anspruch 13, dadurch gekennzeichnet, daß das Analysefenster (40) sich auf den Echographielinien (e(t)) unter Vermeidung der spiegelnden Reflexionszonen (30) verschiebt.

15. Verfahren nach einem der Ansprüche 13 oder 14, dadurch gekennzeichnet, daß die spektralen Elementarleistungen $(A^2_z(F))$ von Echographielinien (e(t)) für jede Position des ersten Zufallsphasen-Schirms durch eine Fourier-Transformationsstufe (222) berechnet und im Inneren des Analysefensters (4) in allen Positionen $(\alpha)$ des ersten Zufallsphasen-Schirms (11) summiert werden, um die mittlere Spektralleistung $\overline{A^2_z(F)}$ zu erhalten.

16. Verfahren nach einem der Ansprüche 13 oder 14, dadurch gekennzeichnet, daß die mittlere Frequenz $\overline{F}(z)$ der Spektren echographischer Linien (e(t)) für eine vorgegebene Position des Analysefensters (40) durch den Mittelwert der Anzahl in allen Positionen $(\alpha)$ des ersten Zufallsphasen-Schirms (11) kumulierter Nulldurchgängen bestimmt wird, während die spektrale Größe $\sigma(z)$ ausgehend von den Echos auf einer Reflektorebene des ausgesandten Ultraschallsignals gemessen wird, und diese Echos in allen Positionen $(\alpha)$ des ersten Zufallsphasen-Schirms (11) kumuliert werden.

**17.** Verfahren nach Anspruch 12, dadurch gekennzeichnet, daß die Echographielinien (e(t)) mit Hilfe eines auf eine Frequenz F zentriertes Filter (225) mit schmalen Durchlaßband gefiltert werden, und daß für diese Frequenz F die Summe der Umhüllenden eine logarithmische Wandlung zum Ableiten der Abschwächung α-(F) erfährt zum Erhalten des Abschwächungsparameters ($\beta$) durch die Frequenz F geteilt wird.

**18.** Verfahren nach einem der Ansprüche 12 bis 17, dadurch gekennzeichnet, daß die mittlere Diffraktionskurve $\overline{D^2_z(F)}$ des piezoelektrischen Wandlers mit dem ersten Zufallsphasen-Schirm (11) im voraus für jede Untersuchungstiefe (z) aufgezeichnet und in allen Positionen ($\alpha$) des ersten Zufallsphasenschirms (11) summiert werden.

FIG.1

FIG.2a

FIG.2b

$$\overline{E}(t)=\sum_{\alpha} E(t)$$

FIG.2c

FIG.3a

FIG.3b

FIG.3c

FIG.3d

FIG.4

FIG.5

FIG.6

FIG.7